# EUROPEAN PATENT APPLICATION

(11) **EP 1 471 286 A1**
(43) Date of publication of application: **27.10.2004**
(21) Application number: 03425256.9
(22) Date of filing: 24.04.2003
(51) Int. Cl.: F16H 25/22

(54) **Ball screw**

(71) Applicant: Umbra Cuscinetti S.p.A., 06034 Foligno (IT)
(72) Inventor: Perni Federico, 06039 Trevi (IT); Pizzoni Luciano, 06034 Foligno (IT); Porzi Carlo, 06034 Foligno (IT)
(74) Representative: Jorio, Paolo

(57) **Abstract**

A ball screw has a given longitudinal axis (3), and is defined by a shaft (2) and a nut (6) coaxial with each other and having respective at least single-start threads (5, 8); the nut (6) having, for each start, at least two endless tracks (9, 10), each of which has a respective portion (17) formed through the nut (6) and parallel to the longitudinal axis (3), and is engaged by a respective train (12, 13) of balls (14, 15).

## Description

The present invention relates to a ball screw.

More specifically, the present invention relates to a ball screw of the type comprising a shaft having a given longitudinal axis and an at least single-start external thread; and a nut fitted coaxially with the shaft, and having an internal thread.

For each start of the screw thread, the nut normally has a track, which extends along an endless path, is engaged by a train of balls, and comprises a first portion defined by a portion of the external thread, a second portion formed through the nut and parallel to said axis, and two connecting portions connecting the first and second portion to each other.

Each connecting portion is defined by a respective diverting element, which is housed inside a cavity formed substantially at one end of the nut, and comprises a guide channel opening outwards in a direction substantially crosswise to said path.

Known ball screws of the above type have several drawbacks, mainly due to the fact that, in the case of a relatively long track and, therefore, a relatively large number of balls, the balls fail to roll smoothly along the track, thus impairing operation of the screw.

It is an object of the present invention to provide a ball screw designed to eliminate the aforementioned drawbacks, and which is cheap and easy to produce.

According to the present invention, there is provided a ball screw as claimed in Claim 1.

A non-limiting embodiment of the present invention will be described by way of example with reference to the accompanying drawings, in which:
Figure 1 shows a schematic view in perspective of a preferred embodiment of the ball screw according to the present invention;
Figure 2 shows a longitudinal section of a detail in Figure 1;
Figure 3 shows a schematic view in perspective of a detail in Figure 2;
Figure 4 shows a schematic side view of a variation of the Figure 1 screw.

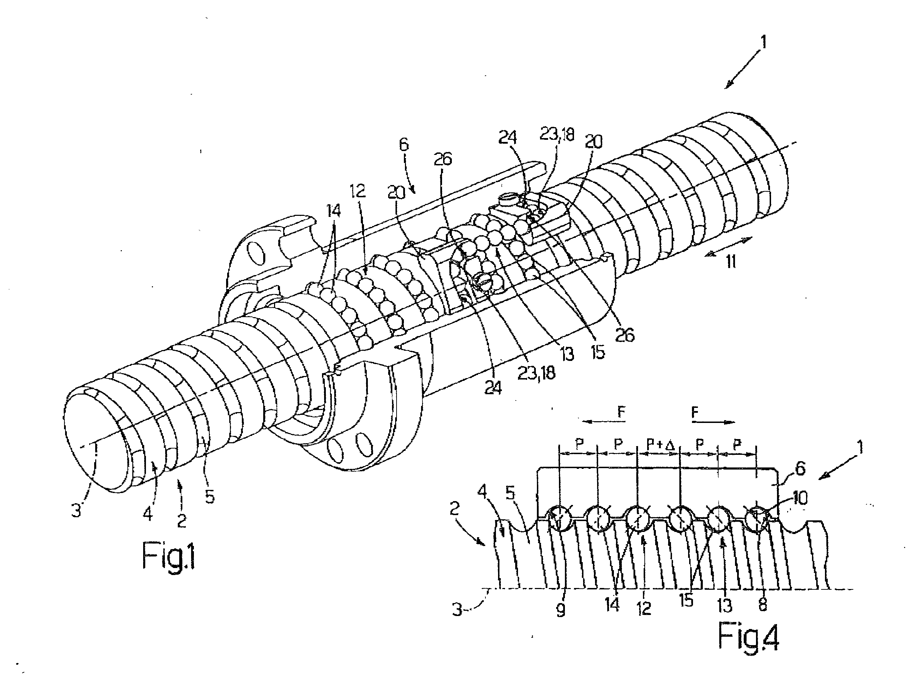

Number 1 in Figure 1 indicates as a whole a ball screw comprising a substantially cylindrical shaft 2, which has a given longitudinal axis 3, is bounded externally by a cylindrical surface 4 coaxial with axis 3, and has a single-start thread 5 formed in surface 4 and coiling about axis 3 with a given pitch P. Obviously, in alternative embodiments not shown, the number of starts of screw 1 is other than one.

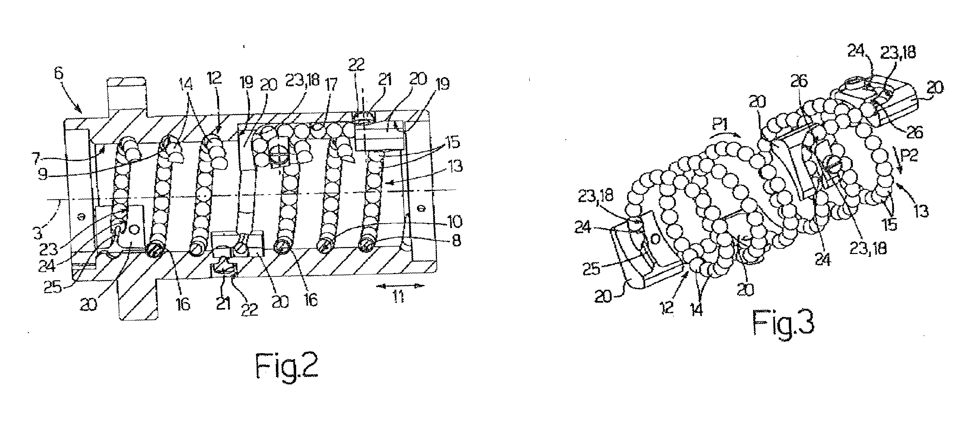

As shown in Figures 1 and 2, screw 1 also comprises a tubular nut 6, which is fitted to shaft 2, is bounded internally by a surface 7 coaxial with axis 3, and has a single-start thread 8 formed on surface 7 and having said pitch P in the example shown.

Nut 6 has two tracks 9 and 10, which are arranged successively in a direction 11 parallel to axis 3, extend along respective endless paths P1 and P2, and are each engaged by respective trains 12 and 13 of balls 14 and 15.

Each track 9, 10 comprises a first portion 16 defined by a portion of thread 8; a second portion defined by a longitudinal hole 17, which is formed through nut 6, parallel to axis 3, and is of a length, measured parallel to axis 3, smaller than the length of nut 6, also measured parallel to axis 3; and two connecting portions 18 for connecting portions 16 and 17 to each other.

In the example shown, nut 6 comprises four cavities 19 formed in and opening outwards at surface 7, and of which two are formed substantially at the free ends of nut 6, and two at respective intermediate points of nut 6.

Each cavity 19 houses a known diverting member 20, which is retained inside cavity 19 by a screw 21 engaging a hole 22 formed through nut 6 crosswise to axis 3. In alternative embodiments not shown, each member 20 is retained inside respective cavity 19 by retaining means other than screws 21, e.g. adhesive.

With reference to Figure 3, each member 20 comprises a guide channel 23, which defines a relative portion 18 and opens outwards in a direction crosswise to relative path P1, P2. Channel 23 comprises a first portion 24, which is oriented substantially the same way as thread 8, is connected to thread 8, and has a projection 25 for moving relative balls 14, 15 outside thread 5; and a second portion 26 substantially parallel to axis 3 and connected to relative hole 17.

The Figure 4 variation differs from the one in Figures 1-3 solely by thread 8 of nut 6 having a pitch variation Δ between tracks 9 and 10, so that screw 1 has zero end play.

In a variation not shown, the two diverting members 20 located centrally along axis 3 are formed in one piece housed inside one cavity 19.

Obviously, in alternative embodiments not shown, the number of tracks for each start of screw 1 is greater than two.

Screw 1 therefore has various advantages, mainly due to tracks 9 and 10 :
enabling the use of two trains 12 and 13 of balls 14 and 15 comprising a relatively small number of balls 14 and 15, and so assisting circulation of balls 14 and 15 along relative paths 9 and 10; and
providing for a single-start screw 1 with zero end play.

## Claims

1. A ball screw with at least one start, comprising a shaft (2) having a given longitudinal axis (3) and an external thread (5); a nut (6) coaxial with said axis (3) and having an internal thread (8), the nut (6) having, for each said start, a first track (9) extending along an endless first path (P1) and comprising a first portion (16) defined by said internal thread (8), a second portion (17) formed through the nut (6) and parallel to said axis (3), and two third connecting portions (18) connecting the first and second portion (16, 17) to each other; two diverting members (20) fitted inside the nut (6) and comprising respective guide channels (23), each of which is open in a first direction crosswise to said first path (P1) to define a respective said third portion (18); and a first train (12) of balls (14) engaging said first track (9); **characterized in that** the nut (6) comprises, for each said start, at least a second track (10) extending along an endless second path (P2) comprising a fourth portion (16) defined by said internal thread (8), a fifth portion (17) formed through the nut (6) and parallel to said axis (3), and two sixth connecting portions (18) connecting the fourth and fifth portion (16, 17) to each other; two further diverting members (20) being fitted inside the nut (6), and comprising respective further guide channels (23), each of which is open in a second direction crosswise to said second path (P2) to define a respective said sixth portion (18); and a second train (13) of balls (15) engaging said second track (10).

2. A screw as claimed in Claim 1, wherein said first and said second track (9, 10) are arranged successively along said axis (3).

3. A screw as claimed in Claim 1 or 2, wherein said second and said fifth portion (17) each have a respective length, measured parallel to said axis (3), smaller than a length of said nut (6) also measured parallel to said axis (3).

4. A screw as claimed in any one of the foregoing Claims, wherein the nut (6) comprises a number of seats (19) equal in number to said diverting members (20), and each for housing a respective said diverting member (20).

5. A screw as claimed in Claim 4, wherein said seats (19) are formed in an inner surface (7) of said nut (6).

6. A screw as claimed in Claim 4 or 5, wherein the nut (6) comprises, for each said seat (19), at least one hole (22) formed through the nut (6); a retaining member (21) engaging each said hole (22) to retain each diverting member (20) inside the relative said seat (19).

7. A screw as claimed in any one of Claims 4 to 6, wherein one of said diverting members (20) is formed in one piece with one of said further diverting members (20), so as to be housed in a single said seat (19).

8. A screw as claimed in any one of the foregoing Claims, wherein said external thread (5) is a single-start thread having a given pitch (P); said first and said second track (9, 10) each having said pitch (P), and being so arranged that the screw has zero end play.

9. A screw as claimed in any one of the foregoing Claims, wherein each said guide channel (23) has a first portion (24) oriented substantially the same way as said internal thread (8), and having a projection (25) for moving the relative said balls (14, 15) outside said external thread (5); and a second portion (26) oriented substantially the same way as said second and fifth portion (17).
